# EUROPÄISCHE PATENTSCHRIFT

(11) **EP 3 707 038 B1**
(45) Veröffentlichungstag und Bekanntmachung des Hinweises auf die Patenterteilung: **22.02.2023**
(21) Anmeldenummer: 18789593.3
(22) Anmeldetag: 17.10.2018
(51) Int. Cl.: B60T 7/12, B60W 30/09, B60W 30/18

(54) **NOTHALTSYSTEM FÜR EIN FAHRZEUG**
EMERGENCY STOP SYSTEM FOR A VEHICLE
SYSTÈME D'ARRÊT D'URGENCE POUR UN VÉHICULE

(30) Priorität: 12.11.2017 DE 102017126513
(43) Veröffentlichungstag der Anmeldung: 16.09.2020
(73) Patentinhaber: ZF Friedrichshafen AG, 88046 Friedrichshafen (DE)
(72) Erfinder: HELLER, Carolin, 88097 Eriskirch (DE); AMANN, Michael, 88069 Tettnang (DE); BECK, Alexander, 88048 Friedrichshafen (DE)
(74) Vertreter: ZF Friedrichshafen AG
(86) Internationale Anmeldenummer: PCT/EP2018/078325
(87) Internationale Veröffentlichungsnummer: WO 2019/091726

(56) Entgegenhaltungen:
- EP-A1- 2 671 768
- DE-A1-102016 203 020
- DE-A1-102017 102 954
- US-B1- 9 523 984

## Beschreibung

Bekannte Systeme zum Überführen von teilautonomen oder autonomen Fahrzeugen in einen sicheren Zustand sind dazu in der Lage, das Fahrzeug durch Stoppen des Antriebs anzuhalten.

Aus der DE 102016 203 020 A1 ist ein Fahrerassistenzsystem mit Nothaltefunktion für ein Kraftfahrzeug bekannt. Das Fahrerassistenzsystem ist eingerichtet, in Abhängigkeit der Betätigung eines Feststellbremse-Bedienelements eine Nothaltefunktion zu aktivieren.

Die DE 10 2017 102 954 A1 offenbart einen Computer, zum Beispiels für einen Massenmarkt-Personenkraftwagen, der von einem virtuellen Fahrer in einem autonomen und/oder halb-autonomen Modus betrieben werden kann, der programmiert ist, um zu bestimmen, dass eine aktuelle Fahrzeugbremskapazität sowohl ein erstes Bremsziel als auch einen Minderungsschwellenwert bei einer aktuellen Geschwindigkeit des Fahrzeug überschreitet.

Aus der EP 2 671 768 A1 geht eine Fahrzeugkontrollvorrichtung hervor, mit welcher ein Fahrzeug unabhängig davon, ob ein Fahrer ein Bremspedal betätigt oder nicht gestoppt werden kann.

Die US 9, 523, 984 B1 zeigt verschiedene Ausführungsformen in Bezug auf ein Überholen eines autonomen Fahrzeugs. Dazu zählen das Identifizieren eines Bereichs einer Straße, in Fahrtrichtung vor dem autonomen Fahrzeug in welchem das Fahrzeug überholt werden kann. Weiter ist ein Verfahren offenbart, mit welchem ein Bremsprofil abhängig von einer Geschwindigkeit und dem Bereich bestimmt wird.

Unter einem sicheren Zustand kann ein Zustand verstanden werden, bei dem das Fahrzeug zumindest angehalten wird, so dass eine Gefahr, die von einer Bewegung des Fahrzeugs ausgehen kann, beseitigt wird. Unter einem sicheren Zustand kann auch ein Zustand verstanden werden, bei dem von dem Fahrzeug keine Gefahr für die Umgebung ausgeht. Unter einem sicheren Zustand kann insbesondere ein Zustand verstanden werden, bei dem das Fahrzeug angehalten ist und/oder zusätzlich zum Antrieb potentiell gefährliche Systeme abgeschaltet sind. Solche potentiell gefährlichen System können beispielsweise eine Hydraulik oder ein Nebenabtrieb sein.

Unter einem teilautonomen Fahrzeug kann ein Fahrzeug verstanden werden, welches unter Anwesenheit eines Fahrers autonom fahren kann. Eine solche Betriebsart ist auch als Autopilot bekannt. Unter einem autonomen Fahrzeug ist ein Fahrzeug zu verstehen, welches ohne Fahrer vollständig selbständig fahren kann.

Ein Fahrzeug kann grundsätzlich jedes Mittel zum Transportieren von Personen oder Gütern sein. Ein Fahrzeug kann insbesondere eine Landmaschine, beispielsweise ein Traktor, ein PKW, ein Nutzfahrzeug, beispielsweise ein LKW oder ein Dumper, oder eine Baumaschine, beispielsweise ein Radlader, sein.

Ein Nothaltsystem der vorgeschlagenen Art ist für ein zumindest teilautonom betreibbares Fahrzeug verwendbar und dient der Überführung des Fahrzeugs in den eingangs erwähnten sicheren Zustand. Unter einem zumindest teilautonom betreibbaren Fahrzeug ist ein Fahrzeug zu verstehen, das in einen Betriebszustand versetzt werden kann, bei dem es in der vorstehend beschriebenen Art und Weise teilautonom betrieben wird, demnach unter Anwesenheit des Fahrers autonom Fahren kann.

Das Nothaltsystem weist eine Betätigungseinrichtung auf, die ein Betätigungssignal in Reaktion auf deren Betätigung ausgeben kann. Eine solche Betätigungseinrichtung kann jedwede Art von Vorrichtung sein, die basierend auf einem Auslöseereignis ein Signal ausgibt. Eine solche Betätigungseinrichtung kann auch als Trigger bezeichnet werden. Die Betätigungseinrichtung kann durch einen Nutzer betätigt werden, beispielsweise eine Bedienperson des Fahrzeugs. Unter einer Betätigungseinrichtung ist somit jegliche Art von Einrichtung zu verstehen, die in Reaktion auf eine Betätigung durch einen Nutzer eine Ausgabe erzeugt, die zur Weiterverarbeitung in einer Steuereinrichtung geeignet ist. Eine solche Ausgabe kann ein spezifisch generiertes Signal sein, kann jedoch auch durch ein einfaches Ein-und Ausschalten eines Stromes verwirklicht sein.

Das Nothaltsystem weist ferner eine Steuereinrichtung auf, die das Betätigungssignal empfängt und basierend auf dem Betätigungssignal ein Steuersignal ausgibt. Ein solches Steuersignal kann insbesondere unter Berücksichtigung weiterer Systeminformationen generiert werden und steht zur Steuerung weiterer Systemkomponenten zur Verfügung. Die Steuereinrichtung kann mehrere Steuereinrichtungen zum Steuern unterschiedlicher Systemkomponenten vereinen.

Zudem weist das Nothaltsystem eine Notbremseinrichtung zum aktiven Bremsen des Fahrzeugs auf. Diese Notbremseinrichtung ist dazu eingerichtet, ein im Fahrzeug vorgesehenes, beispielsweise bereits vorhandenes, Bremssystem basierend auf dem ausgegeben Steuersignal und basierend auf einer vorgegebenen Betriebsart zu betätigen, um eine Bremskraft zur Verzögerung des Fahrzeugs zu erzeugen. Dazu kann die Steuereinrichtung eine Bremssteuereinrichtung zur Ausgabe des Steuersignals aufweisen.

Aktives Bremsen bedeutet, dass im Antriebsstrang des Fahrzeugs eine Bremskraft mechanisch, insbesondere unter Verwendung eines fahrzeugseitigen Bremssystems erzeugt wird, um eine Bewegung des Fahrzeugs zu verzögern. Das Bremssystem wird dabei basierend auf dem ausgegebenen Steuersignal und basierend auf einer vorgegebenen Betriebsart betätigt, um eine Bremskraft zur Verzögerung des Fahrzeugs zu erzeugen. Das Bremssystem kann ein Feststellbremssystem sein, welches auch als Handbremssystem oder Handbremse bezeichnet werden kann.

Durch Verwendung des fahrzeugseitigen Bremssystems ist ein effizientes und sicheres Nothaltsystem geschaffen, welches die Sicherheit des Fahrzeugs unter Verwendung bereits bestehender Komponenten des Fahrzeugs erhöht. Im Gegensatz zu einem einfachen Abschalten eines Fahrzeugantriebs ist es möglich, das Fahrzeug schneller abzubremsen. Zudem kann auf das Abschalten des Fahrzeugantriebs verzichtet werden, wodurch der Antrieb nach Erreichen des sicheren Zustands weiter zur Verfügung steht. So kann der Fahrzeugantrieb bei einem Nothalt weiterhin einen Generator des Fahrzeugs antreiben, wodurch die Fahrzeugbatterie entlastet wird.

Die Notbremseinrichtung kann einen Aktuator umfassen, der dazu eingerichtet ist, das Bremssystem, beispielsweise das Feststellbremssystem, zu betätigen. Auf diese Weise ist es möglich, das Feststellbremssystem automatisiert zu betätigen. Der Aktuator kann ein elektromechanischer Aktuator sein. Dabei kann der Aktuator einen Elektromotor, ein Stellglied und einen Signalgeber aufweisen. Der Signalgeber ist dazu in der Lage, eine Stellung des Stellgliedes als Signal auszugeben und dieses zur Ansteuerung des Elektromotors zur Verfügung zu stellen. Ein solcher Signalgeber kann ein Endschalter sein. Anstelle eines Signalgebers kann eine Stellung des Stellglieds jedoch auch mit einem kontinuierlichem Messsystem, beispielsweise über einen Rücklesestrom, bestimmt werden. Der Aktuator kann im Fahrzeug zusätzlich vorgesehen werden. Hat das Fahrzeug bereits einen elektromechanischen Aktuator zur Betätigung einer Feststellbremse, so kann dieser bereits vorhandene Aktuator direkt angesteuert werden und damit als ein Teil der Notbremseinrichtung angesehen werden. Alternativ oder zusätzlich zum Feststellbremssystem kann auch zusätzlich eine Parksperre im Fahrzeug eingelegt werden, sofern eine solche im Fahrzeug vorhanden ist.

Um zusätzlich zu der im Bremssystem erzeugten Bremskraft eine Zusatzbremskraft zur Verzögerung des Fahrzeugs zu erzeugen, kann die Steuereinrichtung dazu eingerichtet sein, eine bremssystemfremde Einrichtung des Fahrzeugs anzusteuern. Auf diese Weise kann eine besonders schnelle und effiziente Bremsung erreicht werden.

Die bremssystemfremde Einrichtung des Fahrzeugs kann ein Antriebsstrang des Fahrzeugs sein. Die Steuereinrichtung kann eingerichtet sein, den Antriebsstrang so zu schalten, dass ein innerer Widerstand des Antriebsstrangs als Zusatzbremskraft genutzt wird. Dies kann beispielsweise durch gezielte Ansteuerung eines Getriebes oder durch entsprechendes Schalten von Differenzialen erfolgen. Auf diese Weise können bereits vorhandene Komponenten im Antriebsstrang zur zusätzlichen Bremsung verwendet werden. Dies kann zu Kosteneinsparungen beitragen, da bereits vorhandene Fahrzeugkomponenten verwendet werden.

Die Ansteuerung des Getriebes kann so erfolgen, dass nach Ablauf einer vorbestimmten, beispielsweise frei parametrierbaren Zeit, das Getriebe neutral geschaltet wird. Auch kann eine Anfahrkupplung vorgesehen sein, die nach Ablauf der vorbestimmten Zeit geöffnet wird. Auf diese Weise kann der Kraftfluss unterbrochen werden. Das Getriebe kann eine im Kraftfluss befindliche Kupplung aufweisen, die aktiv, beispielsweise durch Bestromung geschlossen werden kann. Bei einer solchen Kupplung wird lediglich die Bestromung unterbrochen, die Kupplung geöffnet und so der Antriebsstrang dauerhaft abgeschaltet. Die Steuereinrichtung kann demnach dazu eingerichtet sein, das Getriebe zumindest temporär so zu betätigen, dass eine Motorbremsung erzeugt wird. Die zusätzlich erzeugte Bremskraft ist daher einstellbar, wodurch eine Bremsung insgesamt effizienter erfolgen kann.

Die Steuereinrichtung kann eine Getriebesteuereinrichtung aufweisen. Je nach verwendeter Getriebeart, kann diese das Getriebe zur Erzeugung einer Bremskraft in einen niedrigen Gang schalten oder dem Getriebe eine geringe Geschwindigkeitssollvorgabe vorgegeben. Beispielsweise kann das Getriebe ein automatisiertes Schaltgetriebe sein. Zum Erzeugen einer Bremswirkung kann dieses Getriebe zeitweise in einen kleinen Sollgang geschaltet werden. Das Getriebe kann auch ein hydrostatisch-leistungsverzweigtes Getriebe sein. In diesem Fall kann dem Getriebe eine Geschwindigkeitssollvorgabe, bspw. 0km/h, vorgegeben werden. Eine solche Getriebesteuerung ermöglicht eine besonders effiziente Erzeugung einer Bremskraft.

Erfindungsgemäß weist das Nothaltsystem eine Betriebsarteinstelleinreichung auf, die dazu eingerichtet ist, eine Aktivierung der Notbremseinrichtung durch die Betätigungseinrichtung wahlweise zu unterbinden. Eine solche Betriebsarteneinstelleinrichtung kann ein Schalter, beispielsweise ein Schlüsselschalter sein. Dieser kann von einem Nutzer betätigt werden und kann über eine elektrische Schaltung je nach Schlüsselschalterposition unterschiedliche Betriebsmodi freigeben oder sperren. Beispielsweise kann ein 2-Draht-Schlüsselschalter vorgesehen sein, der binär insgesamt vier Modi kodieren kann. Beispielsweise kann eine Aktivierung der Notbremseinrichtung durch Entkopplung der Betätigungseinrichtung von der Steuereinrichtung erfolgen, beispielsweise durch Unterbrechung oder Blockierung der Signalübertragung von der Betätigungseinrichtung zu der Steuereinrichtung. Der Schalter kann stationär an dem Fahrzeug befestigbar sein. Dies hat den Vorteil, dass die Betriebsarteinstelleinrichtung nicht versehentlich per Fernauslösung betätigt werden kann.

Weiter erfindungsgemäß ist die Betriebsarteneinstelleinrichtung zusätzlich eingerichtet, der Getriebesteuereinrichtung unterschiedliche Betriebsarten für das Getriebe vorzugeben. Die Betriebsarteneinstelleinrichtung kann somit beispielsweise nicht nur die Bremssteuereinrichtung betätigen, also die Bremse aktivieren oder deaktivieren, sondern kann bei bestimmten Betriebsarten, beispielsweise einem teilautonomen oder autonomen Betrieb, eine Geschwindigkeitsbegrenzung vorgeben. Eine solche Geschwindigkeitsbegrenzung kann in der Getriebesteuerung frei parametrierbar sein. Diese Funktion kann für die ersten Phasen der Produktentstehung verwendet werden, beispielsweise in Prototypen oder ersten Serienanläufen, bis ein ausreichender Vertrauenslevel der Produktfunktionen vorhanden ist.

Als Betriebsart kann neben einem teilautonomen Betrieb und einem autonomen Betrieb auch die Betriebsart Überführungsfahrt vorgesehen sein. Unter Überführungsfahrt kann ein Fahrzeugurzustand verstanden werden, bei dem keine Veränderungen hinsichtlich der Steuerung aktiv sind, beispielsweise die Steuereinrichtung inaktiv ist. Dies ist insbesondere bei Prototypenfahrzeugen wichtig, um die Fahrzeugzulassung nicht zu verlieren. Die Betriebsart Überführungsfahrt kann auch das Fahrzeug in einen Zustand versetzen, in dem es mit höherer Geschwindigkeit betrieben werden kann. Gleichzeitig wird jedoch eine Betätigung der Notbremseinrichtung verhindert, da eine Betätigung und damit verbundene Bremsung zu einer Destabilisierung des Fahrzeugs führen kann.

Die Betätigungseinrichtung kann eine Fernauslöseeinheit bestehend aus einem Sender und einem Empfänger aufweisen. Die Fernauslöseeinheit ermöglicht eine fahrzeugferne Betätigung. Eine Betätigung durch ein Bedienperson muss daher nicht am Fahrzeug erfolgen. Zusätzlich oder alternativ kann die Betätigungseinrichtung eine fahrzeuggebundene Betätigungseinheit aufweisen, die eine Betätigung am Fahrzeug ermöglicht. Eine solche fahrzeuggebundene Betätigungseinheit kann einen oder mehrere Nothaltschalter, auch einfach als Schalter oder Taster bezeichnet, aufweisen, deren Signale über je ein Kabel übertragen werden. Diese Art fahrzeuggebundene Betätigungseinheit hat daher eine geringe Fehleranfälligkeit. Alternativ kann die Übertragung über ein Bussystem erfolgen, insbesondere über ein CAN-Bussystem.

Beispielsweise kann die fahrzeuggebundene Betätigungseinheit vier Nothaltschalter aufweisen, wobei am Fahrzeug jeweils ein Nothaltschalter auf jeder Fahrzeugseite vorgesehen sein kann. Insbesondere können die Nothaltschalter so am Fahrzeug vorgesehen werden, dass diese von einem Nutzer betätigt werden könne, ohne dass sich dieser in einen Gefahrenbereich des Fahrzeugs, bspw. Räder, begeben muss. Bei Vorhandensein einer Fahrzeugkabine an dem Fahrzeug, kann ein zusätzlicher Nothaltschalter in der Fahrzeugkabine vorgesehen sein.

Die Fernauslöseeinheit kann mehrere, vorzugsweise zwei, Sender und Empfänger aufweisen und die fahrzeuggebundene Betätigungseinheit kann mehrere Schalter oder Taster aufweisen. Die Empfänger bzw. Schalter und Taster können so geschaltet sein, dass die Betätigung eines Senders bzw. Schalters oder Tasters zur Ausgabe eines Betätigungssignals führen.

Die Betätigungseinrichtung kann eine Umfeldüberwachung aufweisen, die dazu eingerichtet ist, das Betätigungssignal in Abhängigkeit von erfassten Objekten in der Umgebung des Fahrzeugs auszugeben. Die Umfeldüberwachung kann eine Sensorik zur Erfassung der Umgebung aufweisen. Grundsätzlich kann eine beliebige Sensorik zum Erfassen der Umgebung vorgesehen sein. Als Sensor kann eine Kamera oder eine scannende Erfassungseinheit vorgesehen sein. Alternativ oder zusätzlich kann als Sensor eine Temperaturkamera, welche ein Temperaturbild als Bildinformation erzeugt, oder eine 3D-Kamera, welche ein Tiefenbild als Bildinformation erzeugt, vorgesehen sein.

Ein Fahrzeug kann vorgesehen sein, das zumindest teilautonom betreibbar ist und ein Feststellbremssystem und ein Nothaltsystem nach einem der vorhergehenden Ansprüche aufweist.

Das Nothaltsystem kann einen Sender und einen Empfänger aufweisen, der ein vom Sender gesendetes Funksignal empfängt. Das empfangene Signal kann zur Verarbeitung an die Steuereinrichtung, insbesondere die Bremssteuereinrichtung, weitergegeben werden. Die Steuereinrichtung kann ein Signal zur Ansteuerung des Aktuators generieren. Der Aktuator kann mit einer Feststellbremse oder Handbremse des Fahrzeugs wirkverbunden sein und kann diese betätigen. Der Aktuator kann aus einem Elektromotor, Zahnrädern und Spindelmechanik sowie einem Zugseil oder einer Zugstange bestehen. Zugseil oder Zugstange können mit einem Hebel zur Feststellbremsaktuierung verbunden sein. Dieser Hebel kann zusätzlich zu einem manuell betätigbaren Hebel zur Feststellbremsaktuierung vorgesehen sein und kann auf die bereits vorhandene Feststellbremsmechanik einwirken. Weitere Komponenten der Feststellbremse können eine Bremswelle und Bremslamellen sein.

Ferner können eine Getriebesteuereinrichtung, ein Schlüsselschalter und mehrere Teilsysteme vorgesehen sein. Die Teilsysteme können je nach Schlüsselschalterposition und Betätigungseinrichtungssignal aktiviert oder gesperrt sein. Beispiele von Teilsystemen sind eine Lenkung, ein Fahrzeuggateway, eine Fronthydraulik, eine Heckhydraulik, ein Nebenabtrieb und eine Rundumleuchte. Der Ausgang des Empfängers kann direkt an einen Eingang der Getriebesteuereinrichtung angeschlossen sein. Der Eingang kann ein Digitaleingang sein. Der Eingang kann bereits über eine elektrische Überwachung, beispielsweise eine Kurzschlusserkennung, verfügen. Insbesondere kann der Eingang dazu über eine eigene, gepulste Spannungsversorgung versorgt werden. Der Ausgang des Empfängers kann auch direkt mit einem Eingang der Bremssteuereinrichtung verbunden werden. Die Bremssteuereinrichtung kann eine Bremsung auslösen, wenn am Eingang ein entsprechendes Signal anliegt. Das Signal kann in Form eines Spannungswerts vorliegen und die Bremsfunktion kann ausgelöst werden, wenn der Spannungswert einen Grenzwert über- oder unterschreitet.

Des Weiteren kann das Nothaltsystem eingerichtet sein, alle Zusatzaggregate, die direkt über das Getriebe angesteuert werden können, bei Betätigung der Betätigungseinrichtung auszuschalten. Beispielsweise kann eine Heckzapfwelle ausgeschaltet werden. Außerdem kann das Nothaltsystem eingerichtet sein, dass sämtliche Fahrereingaben mit Ausnahme einer fahrzeugseitigen Bremse deaktiviert werden. Beispielsweise können Eingaben über ein Gaspedal oder über einen Handgashebel sowie über ein Tempomat deaktiviert werden. Die fahrzeugseitige Bremse kann unabhängig von der Notbremseinrichtung betätigbar sein und dadurch weiterhin für einen Fahrer verfügbar bleiben.

Ein zusätzlicher Vorteil des vorstehenden Gesamtsystems ist es, dass mit einem Multimeter eine Fehlersuche vorgenommen werden kann.

Zwei oder mehrere der vorstehend erwähnten Teilsysteme können über ein einziges Relais geschaltet werden, was den Installationsaufwand reduziert.

Anstelle der Verwendung einer Bremssteuereinrichtung zur Ansteuerung des Bremssystems und einer Getriebesteuereinrichtung, kann die Funktion der Bremssteuereinrichtung auch softwaremäßig in der Getriebesteuereinrichtung verwirklicht werden.
Fig. 1 zeigt eine konzeptionelle Darstellung eines Nothaltsystems gemäß einer Ausführungsform.
Fig. 2 zeigt schematisch eine Notbremseinrichtung des Nothaltsystems von Fig. 1.

Im Folgenden werden Ausführungsformen der vorliegenden Erfindung unter Bezugnahme auf die Zeichnungen beschrieben.

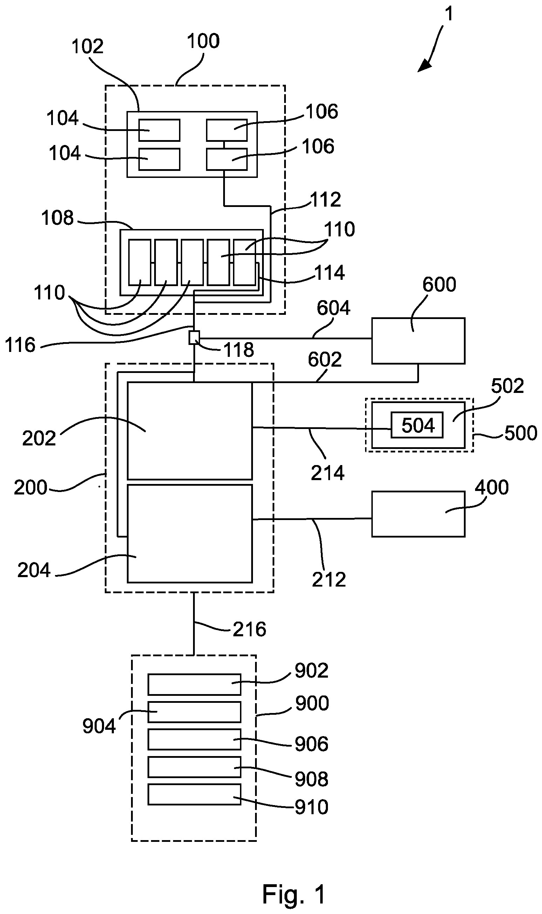

Fig. 1 zeigt eine Ausführungsform eines Nothaltsystems 1. Das Nothaltsystem 1 hat eine Betätigungseinrichtung 100 bestehend aus einer Fernbetätigungseinheit 102 und einer fahrzeuggebundenen Betätigungseinheit 108. Die Fernbetätigungseinheit 102 hat zwei Sender 104 und zwei Empfänger 106, wobei jeweils ein Sender 104 einem Empfänger 106 zugeordnet ist. Eine Betätigung der Sender 104 wird drahtlos mittels Funk zu den Empfängern 106 übertragen. Die Empfänger 106 sind so geschaltet, dass eine Betätigung eines einzigen Senders 104 bereits zur Ausgabe eines Signals von der Fernbetätigungseinheit 102 über eine Signalleitung 112 führt. Die fahrzeuggebundene Betätigungseinheit 108 weist in der Ausführungsform fünf Nothaltschalter 110 auf, von denen einer im Fahrzeug nahe einer Bedienperson angeordnet ist, und jeweils ein Nothaltschalter 110 außen am Fahrzeug an jeweils einer Fahrzeugseite vorgesehen ist. Die Nothaltschalter 110 sind so geschaltet, dass eine Betätigung eines einzigen Schalters 110 zur Ausgabe eines Signals von der fahrzeuggebundenen Betätigungseinheit 108 über eine Signalleitung 114 führt. Die Signale der Signalleitungen 112, 114 werden über eine Signalleitung 116 aus der Betätigungseinrichtung 100 ausgegeben.

Das Nothaltsystem 1 weist ferner eine Steuereinrichtung 200 auf, die mit der Signalleitung 116 verbunden ist und somit die Signale der Betätigungseinrichtung 100 empfangen kann. Die Steuereinrichtung 200 besteht in der Ausführungsform aus einer Bremssteuereinrichtung 204 und einer Getriebesteuereinrichtung 202.

Die Bremssteuereinrichtung 204 ist eine Handbremssteuereinrichtung bzw. Feststellbremssteuereinrichtung und über eine Signalleitung 212 mit einer Notbremseinrichtung 400 verbunden.

Die Notbremseinrichtung 400 weist einen Aktuator 700 in Form eines elektromechanischen Aktuators auf. Der Aktuator 700 weist einen Elektromotor 702, einen Kraftübertragungsmechanismus 704 bestehend aus einer Spindel und einem Kolben, und ein Zugstange 706 auf.

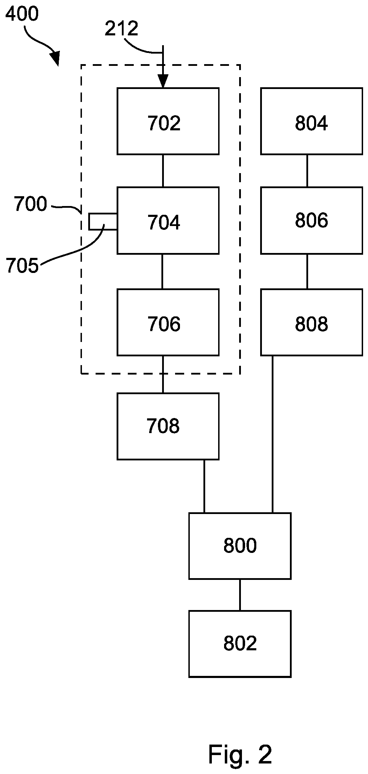

Der Kraftübertragungsmechanismus 704 weist Endschalter 705 als Signalgeber auf, die dann, wenn sich der Kolben auf der Spindel in Endpositionen befindet, ein Signal an die Bremssteuereinrichtung 204 ausgibt, um den Elektromotor 702 zu stoppen. Bei betätigter Bremse befindet sich der der Kolben in einer Endposition und bei vollständig ausgerückter Bremse befindet sich der Kolben in einer anderen Endposition. Die Zugstange 706 ist mit einem Hebel 708 verbunden. Der Hebel 708 ist mit einer Bremswelle 800 verbunden, die mit einer Lamellenbremse 802 verbunden ist. Die Bremswelle 800 ist auch mit weiteren Komponenten einer fahrzeugseitigen Handbremse verbunden. Diese Komponenten umfassen einen Handbremshebel 804, der über einen Bowdenzug 806 mit einem Hebel 808 wirkverbunden ist. Der Hebel 808 ist mit der Bremswelle 800 verbunden. Dieser Aufbau ist in Fig. 2 zu erkennen.

Die Getriebesteuereinrichtung 202 ist mit einer Signalleitung 214 mit einem Getriebe 504 verbunden, welches Teil eines Antriebsstrangs 502 des Fahrzeugs ist und damit Teil einer bremssystemfremden Einrichtung 500 ist. Die Getriebesteuereinrichtung 202 steuert das Getriebe 504 so, dass bei Betätigung der Betätigungseinrichtung temporär eine unterstützende Bremskraft erzeugt wird. In der Ausführungsform ist das Getriebe ein hydrostatisch-leistungsverzweigtes Getriebe. Um die unterstützende Bremskraft zu erzeugen, gibt die Getriebesteuereinrichtung 202 dem Getriebe 504 eine Geschwindigkeitssollvorgabe 0km/h vor. Nach Ablauf einer vorgegebenen Zeit wird das Getriebe 504 neutral geschaltet, so dass keine Kraft vom Antrieb in den Antriebsstrang eingeleitet wird.

Das Nothaltsystem 1 weist ferner eine Betriebsarteinstellvorrichtung 600 in Form eines Schlüsselschalters auf. Dieser kann in der Ausführungsform zwischen den Betriebsarten nichtautonome Überführungsfahrt, teilautonomes Fahren und autonomes Fahren umschalten. Die Betriebsarteinstellvorrichtung 600 ist mit der Getriebesteuereinrichtung 202 über eine Signalleitung 602 verbunden. Des Weiteren ist die Betriebsarteinstellvorrichtung 600 über eine Signalleitung 604 mit einem Unterbrecher 118 verbunden, der in der Signalleitung 116 angeordnet ist und diese unterbrechen kann, so dass über die Signalleitung 116 kein Signal übertragen werden kann.

Bei der Betriebsart nichtautonome Überführungsfahrt ist der Unterbrecher 118 aktiv. Ein in der Betätigungseinrichtung erzeugtes Signal wird daher nicht zu der Steuereinrichtung 200 übertragen. Anders gesagt ist die Betätigungseinrichtung 100 inaktiv geschaltet. Außerdem wird ein Signal an die Getriebesteuereinrichtung 202 übermittelt, um eine im Vergleich zu den andern Betriebsarten höhere Fahrgeschwindigkeit zu gestatten.

Bei der Betriebsart teilautonomes Fahren und der Betriebsart autonomes Fahren ist der Unterbrecher 118 inaktiv. Damit wird ein in der Betätigungseinrichtung 100 erzeugtes Signal zu der Steuereinrichtung 200 übertragen. Die Betätigungseinrichtung 100 ist somit aktiv geschaltet und ein Nothalt kann ausgelöst werden.

Das Nothaltsystem 1 gemäß der Ausführungsform ist auch eingerichtet, Teilsysteme 900 anzusteuern. Dazu ist die Steuereinrichtung 200 über eine Signalleitung 216 mit den Teilsystemen 900 verbunden. Die Teilsysteme 900 umfassen bei der Ausführungsform eine Hydraulik 902 für eine Zusatzlenkung, ein Gateway 904, eine Fronthydraulik 906, eine Heckhydraulik 908, einen Nebenabtrieb 910 (PTO). Diese Teilsysteme 900 werden in Reaktion auf die Betätigung der Betätigungseinrichtung 100 mit Hilfe von Relais abgeschaltet. Somit werden zusätzlich alle potentiell gefährlichen Systeme abgeschaltet.

### Bezugszeichen

- 1: Nothaltsystem
- 100: Betätigungseinrichtung
- 102: Fernauslöseeinheit
- 104: Sender
- 106: Empfänger
- 108: Fahrzeuggebundene Betätigungseinheit
- 110: Nothaltschalter
- 112: Signalleitung
- 114: Signalleitung
- 116: Signalleitung
- 118: Unterbrecher
- 200: Steuereinrichtung
- 202: Getriebesteuereinrichtung
- 204: Bremssteuereinrichtung
- 212: Signalleitung
- 214: Signalleitung
- 216: Signalleitung
- 400: Notbremseinrichtung
- 500: Bremssystemfremde Einrichtung
- 502: Antriebsstrang
- 504: Getriebe
- 600: Betriebsarteinstellvorrichtung
- 602: Signalleitung
- 604: Signalleitung
- 700: Aktuator
- 702: Elektromotor
- 704: Kraftübertragungsmechanismus
- 705: Signalgeber/Endschalter
- 706: Zugstange
- 708: Hebel
- 800: Bremswelle
- 802: Lamellenbremse
- 804: Handbremshebel
- 806: Bowdenzug
- 808: Hebel
- 900: Teilsysteme
- 902: Hydraulik für Zusatzlenkung
- 904: Gateway
- 906: Fronthydraulik
- 908: Heckhydraulik
- 910: Nebenabtrieb

## Patentansprüche

1. Nothaltsystem (1) zum Überführen eines zumindest teilautonom betreibbaren Fahrzeugs in einen sicheren Zustand, mit
einer Betätigungseinrichtung (100) zum Ausgeben eines Betätigungssignals, einer Steuereinrichtung (200) zum Empfangen des Betätigungssignals und zur Ausgabe eines Steuersignals,
einer Notbremseinrichtung (400) zum aktiven Bremsen des Fahrzeugs, wobei die Notbremseinrichtung (400) dazu eingerichtet ist, ein im Fahrzeug vorgesehenes Bremssystem (800, 802) basierend auf dem ausgegeben Steuersignal und basierend auf einer vorgegebenen Betriebsart zu betätigen, um eine Bremskraft zur Verzögerung des Fahrzeugs zu erzeugen, **gekennzeichnet durch**
eine Betriebsarteinstelleinreichung (600), die dazu eingerichtet ist, eine Aktivierung der Notbremseinrichtung (400) durch die Betätigungseinrichtung (100) wahlweise zu unterbinden, wobei die Betriebsarteneinstelleinrichtung (600) zusätzlich eingerichtet ist, der Getriebesteuereinrichtung (202) unterschiedliche Betriebsarten für das Getriebe (504) vorzugeben.

2. Nothaltsystem (1) nach Anspruch 1, **dadurch gekennzeichnet, dass** das Bremssystem (800, 802) ein Feststellbremssystem ist und die Notbremseinrichtung (400) dazu eingerichtet ist, das Feststellbremssystem zu betätigen.

3. Nothaltsystem (1) nach Anspruch 2, **dadurch gekennzeichnet, dass** die Notbremseinrichtung (400) einen Aktuator (700) umfasst, der dazu eingerichtet ist, das Bremssystem (802) zu betätigen, wobei der Aktuator (700) ein elektromechanischer Aktuator mit einem Elektromotor (702), einem Stellglied (704) und einem Signalgeber (705) ist, welcher eine Stellung des Stellglieds (704) als Signal ausgibt, welches zur Ansteuerung des Elektromotors (702) rückgeführt wird.

4. Nothaltsystem (1) nach einem der vorhergehenden Ansprüche, **dadurch gekennzeichnet, dass** die Steuereinrichtung (200) ferner dazu eingerichtet ist, bedarfsweise eine bremssystemfremde Einrichtung (500) des Fahrzeugs anzusteuern, um zusätzlich zu der im Bremssystem (800, 802) erzeugten Bremskraft eine Zusatzbremskraft zur Verzögerung des Fahrzeugs zu erzeugen.

5. Nothaltsystem (1) nach Anspruch 4, **dadurch gekennzeichnet, dass** die bremssystemfremde Einrichtung (500) ein Antriebsstrang (502) des Fahrzeugs ist und die Steuereinrichtung (200) eingerichtet ist, den Antriebsstrang (502) so zu schalten, dass ein innerer Widerstand des Antriebsstrangs (502) als Zusatzbremskraft genutzt wird.

6. Nothaltsystem (1) nach Anspruch 5, **dadurch gekennzeichnet, dass** der Antriebsstrang (502) ein Getriebe (504) aufweist und die Steuereinrichtung (200) dazu eingerichtet ist, das Getriebe (504) zumindest temporär so zu betätigen, dass eine Motorbremsung erzeugt wird.

7. Nothaltsystem (1) nach Anspruch 6, **dadurch gekennzeichnet, dass** die Steuereinrichtung (200) eine Getriebesteuereinrichtung (202) aufweist, die entsprechend einer Bauart eines angesteuerten Getriebes eingerichtet ist, das Getriebe (504) zur Erzeugung einer Bremskraft in einen niedrigen Gang zu schalten oder dem Getriebe eine geringe Geschwindigkeitssollvorgabe vorzugeben.

8. Nothaltsystem (1) nach einem der vorhergehenden Ansprüche,
**dadurch gekennzeichnet,**
**dass** die Betriebsarteneinstelleinrichtung (600) einen Schalter aufweist, der am Fahrzeug stationär befestigbar ist.

9. Nothaltsystem (1) nach einem der vorhergehenden Ansprüche, **dadurch gekennzeichnet, dass** die Betätigungseinrichtung (100) eine Fernauslöseeinheit (102) bestehend aus einem Sender (104) und einem Empfänger (106) aufweist, die eine fahrzeugferne Betätigung ermöglicht, und/oder eine fahrzeuggebundene Betätigungseinheit (108) aufweist, die eine Betätigung am Fahrzeug ermöglicht.

10. Nothaltsystem (1) nach einem der vorhergehenden Ansprüche, **dadurch gekennzeichnet, dass** die Betätigungseinrichtung (100) eine Umfeldüberwachung mit einer Sensorik aufweist, die dazu eingerichtet ist, das Betätigungssignal in Abhängigkeit von erfassten Objekten in der Umgebung des Fahrzeugs automatisiert auszugeben.

11. Fahrzeug, welches zumindest teilautonom betreibbar ist, mit einem Bremssystem (800, 802) und einem Getriebe (504), **gekennzeichnet durch** ein Nothaltsystem (1) nach einem der vorhergehenden Ansprüche.

## Claims

1. Emergency stop system (1) for putting a vehicle that is able to be operated at least partially autonomously into a safe state, having
an actuation device (100) for outputting an actuation signal,
a control device (200) for receiving the actuation signal and for outputting a control signal,
an emergency braking device (400) for actively braking the vehicle, wherein the emergency braking device (400) is configured to actuate a brake system (800, 802) provided in the vehicle based on the output control signal and based on a predefined operating mode in order to generate a braking force for decelerating the vehicle, **characterized by**
an operating mode setting device (600) that is configured to selectively prohibit activation of the emergency braking device (400) by the actuation device (100), wherein the operating mode setting device (600) is additionally configured to specify different operating modes for the transmission (504) to the transmission control device (202).

2. Emergency stop system (1) according to Claim 1, **characterized in that** the brake system (800, 802) is a parking brake system and the emergency braking device (400) is configured to actuate the parking brake system.

3. Emergency stop system (1) according to Claim 2, **characterized in that** the emergency braking device (400) comprises an actuator (700) that is configured to actuate the brake system (802), wherein the actuator (700) is an electromechanical actuator having an electric motor (702), an actuating element (704) and a signal transmitter (705) that outputs a position of the actuating element (704) in the form of a signal that is fed back so as to drive the electric motor (702).

4. Emergency stop system (1) according to one of the preceding claims, **characterized in that** the control device (200) is furthermore configured to drive a device (500) of the vehicle that is external to the brake system if necessary in order to generate, in addition to the braking force generated in the brake system (800, 802), an additional braking force for decelerating the vehicle.

5. Emergency stop system (1) according to Claim 4, **characterized in that** the device (500) external to the brake system is a drivetrain (502) of the vehicle and the control device (200) is configured to switch the drivetrain (502) such that an internal resistance of the drivetrain (502) is used as additional braking force.

6. Emergency stop system (1) according to Claim 5, **characterized in that** the drivetrain (502) has a transmission (504) and the control device (200) is configured to at least temporarily actuate the transmission (504) such that engine braking is generated.

7. Emergency stop system (1) according to Claim 6, **characterized in that** the control device (200) has a transmission control device (202) that is configured, in accordance with a structure of a driven transmission, to switch the transmission (504) so as to generate a braking force in a low gear or to specify a low speed target specification for the transmission.

8. Emergency stop system (1) according to one of the preceding claims, **characterized in that** the operating mode setting device (600) has a switch that is able to be fastened to the vehicle in a stationary manner.

9. Emergency stop system (1) according to one of the preceding claims, **characterized in that** the actuation device (100) has a remote trip unit (102) consisting of a transmitter (104) and a receiver (106) and that enables actuation remote from the vehicle, and/or has an actuation unit (108) connected to the vehicle and that enables actuation on the vehicle.

10. Emergency stop system (1) according to one of the preceding claims, **characterized in that** the actuation device (100) has a surroundings monitoring system with a sensor system that is configured to output the actuation signal automatically on the basis of detected objects in the surroundings of the vehicle.

11. Vehicle, able to be operated at least partially autonomously, having a brake system (800, 802) and a transmission (504), **characterized by** an emergency stop system (1) according to one of the preceding claims.

## Revendications

1. Système d'arrêt d'urgence (1) permettant de faire passer à un état sûr un véhicule pouvant fonctionner au moins partiellement de manière autonome, comprenant
un dispositif d'actionnement (100) pour émettre un signal d'actionnement,
un dispositif de commande (200) pour recevoir le signal d'actionnement et pour émettre un signal de commande,
un dispositif de freinage d'urgence (400) pour le freinage actif du véhicule, le dispositif de freinage d'urgence (400) étant conçu pour actionner un système de freinage (800, 802) prévu dans le véhicule sur la base du signal de commande émis et sur la base d'un mode de fonctionnement prédéfini afin de générer une force de freinage pour décélérer le véhicule,
**caractérisé par** un dispositif de réglage de mode de fonctionnement (600) qui est conçu pour empêcher au choix une activation du dispositif de freinage d'urgence (400) par le dispositif d'actionnement (400), dans lequel le dispositif de réglage de mode de fonctionnement (600) est en outre conçu pour spécifier au dispositif de commande de boîte de vitesses différents modes de fonctionnement pour la boîte de vitesses (504).

2. Système d'arrêt d'urgence (1) selon la revendication 1, **caractérisé en ce que** le système de freinage (800, 802) est un système de frein de stationnement, et le dispositif de freinage d'urgence (400) est conçu pour actionner le système de frein de stationnement.

3. Système d'arrêt d'urgence (1) selon la revendication 2, **caractérisé en ce que** le dispositif de freinage d'urgence (400) comprend un actionneur (700) qui est conçu pour actionner le système de freinage (802), dans lequel l'actionneur (700) est un actionneur électromécanique pourvu d'un moteur électrique (702), d'un composant de réglage (704) et d'un générateur de signal (705) qui émet une position du composant de réglage (704) sous la forme d'un signal qui est asservi pour piloter le moteur électrique (702).

4. Système d'arrêt d'urgence (1) selon l'une quelconque des revendications précédentes, **caractérisé en ce que** le dispositif de commande (200) est en outre conçu pour piloter au besoin un dispositif (500) externe au système de freinage du véhicule afin de générer en plus de la force de freinage générée dans le système de freinage (800, 802) une force de freinage supplémentaire pour décélérer le véhicule.

5. Système d'arrêt d'urgence (1) selon la revendication 4, **caractérisé en ce que** le dispositif (500) externe au système de freinage est une chaîne cinématique (502) du véhicule, et le dispositif de commande (200) est conçu pour commuter la chaîne cinématique (502) de telle sorte qu'une résistance intérieure de la chaîne cinématique (502) est utilisée comme force de freinage supplémentaire.

6. Système d'arrêt d'urgence (1) selon la revendication 5, **caractérisé en ce que** la chaîne cinématique (502) présente une boîte de vitesses (504), et le dispositif de commande (200) est conçu pour actionner la boîte de vitesses (504) au moins temporairement de façon à générer un freinage moteur.

7. Système d'arrêt d'urgence (1) selon la revendication 6, **caractérisé en ce que** le dispositif de commande (200) présente un dispositif de commande de boîte de vitesses (202) qui est conçu, selon un modèle d'une boîte de vitesses pilotée, pour mettre la boîte de vitesses (504) sur un rapport inférieur pour la génération d'une force de freinage ou pour spécifier pour la boîte de vitesses une spécification de consigne de vitesse réduite.

8. Système d'arrêt d'urgence (1) selon l'une quelconque des revendications précédentes, **caractérisé en ce que** le dispositif de réglage de mode de fonctionnement (600) présente un commutateur qui peut être fixé de manière stationnaire au véhicule.

9. Système d'arrêt d'urgence (1) selon l'une quelconque des revendications précédentes, **caractérisé en ce que** le dispositif d'actionnement (100) présente une unité de déclenchement à distance (102), composée d'un émetteur (104) et d'un récepteur (106), qui permet un actionnement à distance du véhicule, et/ou présente une unité d'actionnement (108) liée au véhicule qui permet un actionnement sur le véhicule.

10. Système d'arrêt d'urgence (1) selon l'une quelconque des revendications précédentes, **caractérisé en ce que** le dispositif d'actionnement (100) présente une surveillance de l'environnement à l'aide d'un système de capteurs et qui est conçue pour émettre de manière automatisée le signal d'actionnement en fonction des objets détectés dans l'environnement du véhicule.

11. Véhicule pouvant fonctionner de manière au moins partiellement autonome, comprenant un système de freinage (800, 802) et une boîte de vitesses (504), **caractérisé par** un système d'arrêt d'urgence (1) selon l'une quelconque des revendications précédentes.
